(19) Europäisches Patentamt
European Patent Office
Office européen des brevets

(11)  **EP 2 149 171 B3**

## (12) NEUE EUROPÄISCHE PATENTSCHRIFT
Nach dem Beschränkungsverfahren (B3-1)

(45) Hinweis auf die Patenterteilung:
**20.11.2013 Patentblatt 2013/47**

(45) Veröffentlichungstag und Bekanntmachung des Hinweises auf die Entscheidung über den Antrag auf Beschränkung:
**B3-1 29.07.2015 Patentblatt 2015/31**

(21) Anmeldenummer: 08750135.9

(22) Anmeldetag: **07.05.2008**

(51) Int Cl.:
*H01M 8/02* *(2006.01)*

(86) Internationale Anmeldenummer:
**PCT/EP2008/055614**

(87) Internationale Veröffentlichungsnummer:
**WO 2008/138824 (20.11.2008 Gazette 2008/47)**

(54) **TRÄGERVORRICHTUNG FÜR EINE ELEKTROCHEMISCHE FUNKTIONSEINRICHTUNG, BRENNSTOFFZELLEMODUL UND VERFAHREN ZUR HERSTELLUNG EINER TRÄGERVORRICHTUNG**

CARRIER DEVICE FOR AN ELECTROCHEMICAL FUNCTIONAL DEVICE, FUEL CELL MODULE AND METHOD FOR THE PRODUCTION OF A CARRIER DEVICE

DISPOSITIF SUPPORT POUR UN ÉQUIPEMENT FONCTIONNEL ÉLECTROCHIMIQUE, MODULE DE PILE À COMBUSTIBLE ET PROCÉDÉ DE FABRICATION D'UN DISPOSITIF SUPPORT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **11.05.2007 DE 102007024225**

(43) Veröffentlichungstag der Anmeldung:
**03.02.2010 Patentblatt 2010/05**

(73) Patentinhaber: **Deutsches Zentrum für Luft- und Raumfahrt e.V.**
**51147 Köln (DE)**

(72) Erfinder: **SZABO, Patric**
**75443 Ötisheim (DE)**

(74) Vertreter: **Hoeger, Stellrecht & Partner Patentanwälte**
**Uhlandstrasse 14c**
**70182 Stuttgart (DE)**

(56) Entgegenhaltungen:
WO-A-93/13566          DE-U1-202005 020 601
GB-A- 2 368 450         GB-A- 2 400 723
US-A1- 2001 008 722

**Beschreibung**

Die Erfindung betrifft eine Trägervorrichtung für eine elektrochemische Funktionseinrichtung einer Hochtemperatur-Brennstoffzelle.

Weiterhin betrifft die Erfindung ein Brennstoffzellenmodul, welches eine elektrochemische Funktionseinrichtung umfasst.

Weiterhin betrifft die Erfindung ein Verfahren zur Herstellung einer Trägervorrichtung für eine elektrochemische Funktionseinrichtung.

Aus der DE 198 41 919 A1 ist ein Brennstoffzellenmodul bekannt, welches eine Brennstoffzelle aufweist, die an ihrer Anode und ihrer Kathode jeweils mit einem Stromabnehmer versehen ist. Die Anode ist mit Hilfe eines Lots an ihrem Stromabnehmer befestigt.

Aus der DE 20 2005 020 601 U1 ist eine Brennstoffzelleneinheit, umfassend eine Kathoden-Elektrolyt-Anoden-Einheit und mindestens ein Kontaktelement zum elektrisch leitenden Kontaktieren der Kathoden-Elektrolyt-Anoden-Einheit bekannt. Das mindestens eine Kontaktelement umfasst eine mit einer Vielzahl von Durchbrüchen versehene Platte.

Aus der EP 1 318 560 A2 ist ein Träger für eine elektrochemische Funktionseinheit einer Hochtemperatur-Brennstoffzelle bekannt, welcher zur Zuführung von Reaktanten und/oder Abführung von Reaktionsprodukten eine Porosität aufweist.

Aus der WO 99/53558 ist ein Brennstoffzellenstapel bekannt, welcher mehrere Brennstoffzellen umfasst, die durch verbindende Elemente elektrisch und mechanisch miteinander verbunden sind. Die verbindenden Elemente bestehen aus Metall oder einer Metalllegierung und jedes verbindende Element weist wenigstens einen Elektrodenraum und eine poröse Wand auf. Die poröse Wand des verbindenden Elements trennt den Elektrodenraum von einer angrenzenden Anode.

Aus der GB 2 368 450 A sind Brennstoffzellen vom Typ SOFC bekannt, welcher ein Substrat aus einem ferritischen Stahl umfasst, welcher einen porösen Bereich und einen nicht-porösen Bereich umfasst, wobei letzterer den porösen Bereich begrenzt. Eine Bipolarplatte aus ferritischem Stahl ist über einer Oberfläche des porösen Bereichs des Substrats positioniert und ist über eine dichtende Verbindung mit dem nicht-porösen Bereich des Substrats um den porösen Bereich verbunden. Eine erste Elektrodenschicht ist auf der anderen Oberfläche des porösen Bereichs des Substrats angeordnet. Eine Elektrolytschicht ist auf der ersten Elektrodenlage angeordnet und eine zweite Elektrodenlage ist über der Elektrolytschicht angeordnet.

Aus der GB 2 400 723 A ist eine Brennstoffzelle vom Typ SOFC bekannt, welcher ein Stahlsubstrat mit einem porösen Träger und einem nicht-porösen Rahmen umfasst, wobei der Rahmen den porösen Träger oder eine Anzahl von porösen Trägern aufnimmt.

Der Erfindung liegt die Aufgabe zugrunde, eine Trägervorrichtung der eingangs genannten Art bereitzustellen, welche auf einfache Weise herstellbar ist und vorteilhafte Eigenschaften aufweist.

Diese Aufgabe wird erfindungsgemäß dadurch gelöst, dass die Trägervorrichtungeine Rahmeneinrichtung aus einem elektrisch leitfähigen Material umfasst und mindestens einen Fensterbereich aus einem elektrisch leitfähigen Material, welcher an der Rahmeneinrichtung integral gebildet ist und einstückig an der Rahmeneinrichtung angeordnet ist, umfasst, wobei der mindestens eine Fensterbereich aus einem porösen Material hergestellt ist und über die Porosität gasdurchlässig ist und wobei die Rahmeneinrichtung im Vollmaterial gasundurchlässig ist, wobei die Trägervorrichtung pulvermetallurgisch hergestellt ist und unterschiedliche Ausgangsmaterialien für die Herstellung der Rahmeneinrichtung und des Fensterbereichs verwendet sind, wobei die Ausgangsmaterialien Metallpulver und Bindemittel umfassen und der Bindemittelariteil in dem Ausgangsmaterial für den Fensterbereich höher ist als in dem Ausgangsmaterial für die Rahmeneinrichtung.

Die Trägervorrichtung ist über die Rahmeneinrichtung und dem mindestens einen Fensterbereich elektrisch leitend, so dass sie beispielsweise als Bipolarplatte oder als Interkonnektor einsetzbar ist. Über die Trägervorrichtung lässt sich beispielsweise eine Anode elektrisch kontaktieren. Die Trägervorrichtung kann dadurch beispielsweise als Träger für eine Anode dienen, wobei über den mindestens einen porösen Fensterbereich der Anode Reaktionsgas durchführbar ist.

Durch die integrale Bildung des mindestens einen Fensterbereichs an der Rahmeneinrichtung müssen keine Lötstellen oder Schweißstellen für die Verbindung vorgesehen werden. Dadurch entstehen auch keine Sprünge im thermischen Ausdehnungskoeffizienten, da keine Übergänge an Lötstellen bzw. Schweißverbindungen vorliegen. Weiterhin sind dann auch Sprünge in der Spannungsverteilung, in Legierungszusammensetzung usw. verhindert. Dadurch sind Probleme beispielsweise im Zusammenhang mit keramischen Schichten, die an der Trägervorrichtung angeordnet sind, vermieden.

Die Trägervorrichtung mit der Rahmeneinrichtung und dem integralen mindestens einen Fensterbereich lässt sich auf einfache Weise über pulvermetallurgische Verfahren herstellen. Es ist eine integrale Herstellung möglich. Dadurch lässt sich die Anzahl der Herstellungsschritte und damit wiederum der Herstellungsaufwand gering halten.

Durch die - im Vollmaterial - gasundurchlässige Rahmeneinrichtung und den mindestens einen gasdurchlässigen Fensterbereich lässt sich der elektrischen Funktionseinrichtung gezielt Reaktionsgas wie Brenngas oder Oxidator bereitstellen, wobei sich auch auf einfache Weise eine hohe Dichtigkeit eines Gasraums erreichen lässt. Die im Vollmaterial gasundurchlässige Rahmeneinrichtung kann als Zuführungseinrichtung für Reaktionsgas in einem Gasraum eingesetzt werden, indem an der Rahmeneinrichtung entsprechende Kanäle gebildet werden. Entsprechend lässt sich die Rahmeneinrichtung auch als Abführungseinrichtung für Reaktionsprodukte einsetzen.

Günstig ist es, wenn Rahmenelemente der Rahmeneinrichtung den mindestens einen Fensterbereich seitlich umgeben. Dadurch lässt sich der gasdurchlässige Fensterbereich seitlich über die Rahmeneinrichtung abdichten.

Der mindestens eine Fensterbereich ist einstückig an der Rahmeneinrichtung angeordnet. Dadurch ist keine stoffschlüssige, formschlüssige oder dergleichen Verbindung zwischen dem mindestens einen Fensterbereich und der Rahmeneinrichtung notwendig.

Günstig ist es, wenn der mindestens eine Fensterbereich und die Rahmeneinrichtung aus dem gleichen Material hergestellt sind. Dadurch entstehen zwischen dem mindestens einen Fensterbereich und der Rahmeneinrichtung am Übergang keine Sprünge im thermischen Ausdehnungskoeffizienten, in der Spannungsverteilung, in den Legierungsanteilen usw.

Ganz besonders vorteilhaft ist es, wenn die Trägervorrichtung pulvermetallurgisch hergestellt ist. Dadurch lässt sich eine gleichmäßige (homogene) Materialverteilung erreichen. Dadurch wiederum ist die Oxidationsbeständigkeit der Trägervorrichtung sehr hoch, da - beispielsweise im Vergleich zu durch Prägung hergestellten Trägervorrichtungen - "Oxidationsschwachstellen" aufgrund ungleichmäßiger Legierungsverteilung vermieden sind. Weiterhin lässt sich die Trägervorrichtung mit hoher Ebenheit herstellen, so dass sie sich auf einfache Weise in einem Gehäuse positionieren lässt. Dadurch wiederum ist es möglich, die Trägervorrichtung auf einfache Weise zur Ausbildung von Brennstoffzellenstapeln aus mehreren Brennstoffzellen zu verwenden.

Es kann vorgesehen sein, dass die Trägervorrichtung einen oder mehrere Stützfüße umfasst. Über Stützfüße kann sich die Trägervorrichtung an einer Unterlage wie beispielsweise einem Gehäuse abstützen. Über die Stützfüße lässt sich beispielsweise eine elektrische Kontaktierung zu der Unterlage erreichen. Ferner lässt sich ein Gasraum ausbilden, über den der elektrochemischen Funktionseinrichtung durch den mindestens einen Fensterbereich hindurch Reaktionsgas zuführbar ist.

Insbesondere sind dabei ein oder mehrere Stützfüße an der Rahmeneinrichtung angeordnet. Dadurch lässt sich die entsprechende mechanische Stabilität erreichen. Beispielsweise ist dadurch auch eine einfache Verbindbarkeit mit der Unterlage (beispielsweise durch Verlöten) realisierbar.

Es ist dabei günstig, wenn der oder die Stützfüße einstückig an der Rahmeneinrichtung gebildet sind.

Es ist ferner günstig, wenn die Stützfüße so angeordnet und ausgebildet sind, dass unterhalb des mindestens einen Fensterbereichs ein Gasraum ausbildbar ist. Eine Unterseite eines Stützfußes ist dann beabstandet zu einer Unterseite des mindestens einen Fensterbereichs.

Es kann vorgesehen sein, dass die Trägervorrichtung als Bipolarplatte ausgebildet ist oder als Interkonnektor ausgebildet ist. Sie kann dann gleichzeitig Träger einer elektrochemischen Funktionseinrichtung sein und für eine elektrische Kontaktierung sorgen.

Bei einer Ausführungsform ist an der Rahmeneinrichtung eine elektrische Kontakteinrichtung angeordnet, über die die Rahmeneinrichtung an einem Gehäuse abstützbar ist. Die elektrische Kontakteinrichtung kann dabei integraler Bestandteil der Rahmeneinrichtung sein und beispielsweise an dieser einstückig gebildet sein. Es ist auch möglich, dass eine getrennte elektrische Kontakteinrichtung beispielsweise in Form eines Netzes an der Rahmeneinrichtung beispielsweise über Löten fixiert ist.

Günstigerweise ist an dem mindestens einen Fensterbereich mindestens eine elektrochemische Funktionsschicht angeordnet. Bei dieser elektrochemischen Funktionsschicht kann es sich um eine keramische Schicht oder um eine nichtkeramische Schicht wie beispielsweise eine metallische Schicht handeln. Diese elektrochemische Funktionsschicht kann dabei integral bei der Herstellung des mindestens einen Fensterbereichs und der Rahmeneinrichtung mithergestellt werden, indem beispielsweise bei einem pulvermetallurgischen Verfahren ein entsprechendes Ausgangsmaterial positioniert wird.

Bei einem Ausführungsbeispiel ist die mindestens eine elektrochemische Funktionsschicht eine Anodenschicht oder Kathodenschicht. Über den porösen Fensterbereich lässt sich dann der Anode Brennstoffgas bereitstellen bzw. der Kathode lässt sich Oxidatörgas bereitstellen.

Es ist auch möglich, dass die mindestens eine elektrochemische Funktionsschicht eine poröse Anodensubstratschicht bzw. poröse Kathodensubstratschicht ist, welche elektrisch leitfähig ist und auf welcher wiederum eine Anodenschicht bzw. Kathodenschicht positionierbar ist.

Es kann vorgesehen sein, dass an der Rahmeneinrichtung ein oder mehrere Kanäle angeordnet sind. Ein Kanal ist dabei insbesondere als durchgehende Öffnung beispielsweise in Form einer Bohrung ausgebildet. Es lässt sich dadurch durch die Rahmeneinrichtung hindurch beispielsweise einem Gasraum Reaktionsgas zuführen bzw. es lassen sich Reaktionsprodukte abführen.

Es kann vorgesehen sein, dass die Trägervorrichtung als Platte ausgebildet ist beispielsweise mit einer im Wesentlichen ebenen Oberseite und im Wesentlichen einer ebenen Unterseite. Es ist dabei möglich, dass an der Oberseite und/oderder Unterseite Füße herausragen.

Günstigerweise ist die Trägervorrichtung als Sinterplatte ausgebildet. Sie lässt sich dadurch auf einfache und kostengünstige Weise herstellen.

Der Erfindung liegt ferner die Aufgabe zugrunde, ein Brennstoffzellenmodul der eingangs genannten Art bereitzustellen, welches auf einfache Weise herstellbar ist.

Diese Aufgabe wird bei dem eingangs genannten Brennstoffzellenmodul erfindungsgemäß dadurch gelöst, dass eine erfindungsgemäße Trägervorrichtung verwendet wird, wobei die elektrochemische Funktionseinrichtung an der Trägervorrichtung angeordnet ist.

Das erfindungsgemäße Brennstoffzellenmodul weist die bereits im Zusammenhang mit der erfindungsgemäßen Trägervorrichtung erläuterten Vorteile auf.

Insbesondere umfasst die elektrochemische Funktionseinrichtung eine Kathode und einen Elektrolyten. Es lassen sich dann die entsprechenden elektrochemischen Zellreaktionen durchführen.

Es kann auch vorgesehen sein, dass die elektrochemische Funktionseinrichtung eine Elektrode umfasst. (Es ist grundsätzlich möglich, dass die Elektrode Teil der Trägervorrichtung ist bzw. Teil der elektrochemischen Funktionseinrichtung ist.)

Es ist dann günstig, wenn die Anode oder die Kathode in dem mindestens einen Fensterbereich angeordnet ist. Über den Fensterbereich lässt sich der Anode Brennstoffgas zuführen bzw. der Kathode lässt sich Oxidator zuführen. Die Trägervorrichtung ist dadurch eine mechanische Haltevorrichtung für die Anode bzw. die Kathode und sorgt für die Zuführbarkeit von Brennstoff bzw. Oxidator.

Es ist ferner günstig, wenn ein Gehäuse vorgesehen ist. In oder an dem Gehäuse kann die Trägervorrichtung und die Funktionseinrichtung aufgenommen werden. Durch ein Gehäuse lässtsich beispielsweise ein Anodenraum (oder Kathodenraum) bereitstellen, um der Anode Brennstoffgas zuführen zu können. Ferner ist über das Gehäuse eine elektrische Kontaktierung von benachbarten Brennstoffzellenmodulen möglich, um einen Brennstoffzellenstapel zu bilden.

Es ist dabei grundsätzlich möglich, dass die Trägervorrichtung eine von dem Gehäuse getrennte Einrichtung ist oder Teil des Gehäuses ist. Im letzteren Falle lässt sich das Brennstoffzellenmodul kompakt mit minimierter Dicke aufbauen.

Bei einer Ausführungsform bildet die Trägervorrichtung ein Deckelelement des Gehäuses, welches einen Elektrodenraum abschließt. Der Elektrodenraum ist beispielsweise ein Anodenraum, über welchen durch den mindestens einen Fensterbereich hindurch einer Anode Brennstoffgas zugeführt wird. Über die im Vollmaterial gasundurchlässige Rahmeneinrichtung lässt sich der Elektrodenraum gasdicht abschließen.

Es ist dann günstig, wenn eine gasdichte Elektrolytschicht den mindestens einen Fensterbereich vollständig überdeckt. Dadurch lässt sich gewährleisten, dass kein Brennstoffgas von der Anodenseite zur Kathodenseite gelangen kann und kein Oxidatorgas von der Kathodenseite zur Anodenseite gelangen kann. Durch die gasdichte Elektrolytschicht lässt sich die entsprechende Elektrode (beispielsweise die Anode) überdecken und durch die vollständige Überdeckung des mindestens einen Fensterbereichs ist gewährleistet, dass die Kombination aus Elektrode (wie beispielsweise Anode) und mindestens einem Fensterbereich fluiddicht "versiegelt" ist bezüglich der anderen Elektrode (beispielsweise der Kathode).

Es ist günstig, wenn das Gehäuse aus einem metallischen Material hergestellt ist.

Es kann vorgesehen sein, dass die Rahmeneinrichtung mit dem Gehäuse oder einem Gehäuseteil verlötet ist. Dadurch lässt sich ein elektronischer Leitungspfad bereitstellen. Insbesondere wird dadurch ein elektronischer Leitungspfad hergestellt, welcher zusätzlich zu dem über eine elektrische Kontakteinrichtung hergestellten elektronischen Leitungspfad ist.

Es ist dann günstig, wenn die Rahmeneinrichtung an gegenüberliegenden Seiten mit dem Gehäuse oder einem Gehäuseteil verlötet ist. Sie kann beispielsweise großflächig mit einer Unterschale des Gehäuses verlötet sein. Sie kann zusätzlich mit einem Überlappbereich des Gehäuses verlötet sein, um einen zusätzlichen elektronischen Leitungspfad bereitzustellen.

Der Erfindung liegt ferner die Aufgabe zugrunde, ein Verfahren der eingangs genannten Art bereitzustellen, welches auf einfache Weise durchführbar ist.

Diese Aufgabe wird bei dem eingangs genannten Verfahren erfindungsgemäß dadurch gelöst, dass aus elektrisch leitfähigem Material eine im Vollmaterial gasundurchlässige Rahmeneinrichtung hergestellt wird und an der Rahmeneinrichtung mindestens ein poröser, gasdurchlässiger Fensterbereich hergestellt wird.

DaserfindungsgemäßeVerfahrenweistdiebereits im Zusammenhang mit der erfindungsgemäßen Trägervorrichtung und dem erfindungsgemäßen Brennstoffzellenmodul erläuterten Vorteile auf.

Weitere vorteilhafte Ausgestaltungen wurden ebenfalls bereits im Zusammenhang mit der erfindungsgemäßen Trägervorrichtung und dem erfindungsgemäßen Brennstoffzellenmodul erläutert.

Ganz besonders vorteilhaft ist es, wenn die Rahmeneinrichtung und der mindestens eine Fensterbereich aus dem gleichen Material hergestellt werden. Dadurch sind "mismatch"-Probleme am Übergang zwischen dem mindestens einen Fensterbereich und der Rahmeneinrichtung vermieden. Insbesondere treten keine Sprünge im thermischen Ausdehnungskoeffizienten, im Spannungsverhalten, in der Legierungszusammensetzung usw. auf.

Ganz besonders vorteilhaft ist es, wenn eine pulvermetallurgische Herstellung vorgesehen wird. Dadurch lässt sich auf einfache Weise der mindestens eine Fensterbereich integral an der Rahmeneinrichtung herstellen. Die Fertigungsschritte lassen sich minimieren. Aus Ausgangsmaterialzusammensetzungen wird ein Grünkörper hergestellt, welcher Ausgangsbereiche für den mindestens einen Fensterbereich und die Rahmeneinrichtung enthält. DieserGrünkörper wird gesintert und die Trägervorrichtung wird erhalten. Gegebenenfalls kann der erhaltene Körper noch nachbearbeitet werden, beispielsweise durch Bohrung von Gaskanälen in der Rahmeneinrichtung.

Es ist günstig, wenn ein Metallpulver mit Bindemittel als Ausgangsmaterial verwendet wird. Dadurch lässt sich sowohl die Rahmeneinrichtung als auch der mindestens eine Fensterbereich herstellen, wobei insbesondere durch Variation des Bindemittelanteils einstellbar ist, ob der entsprechende Bereich gasdurchlässig oder gasundurchlässig ist.

Insbesondere wird für die Herstellung des mindestens einen Fensterbereichs das Ausgangsmaterial mit einem höheren Bindemittelanteil versehen als das Ausgangsmaterial für die Herstellung der Rahmeneinrichtung.

Es kann zusätzlich noch vorgesehen sein, dass das Ausgangsmaterial für den mindestens einen Fensterbereich mit Porenbildner versetzt wird, um entsprechend die Porosität einzustellen.

Günstig ist es, wenn ein Vorkörper, welcher aus den unterschiedlichen Ausgangsmaterialzusammensetzungen hergestellt wird (Grünkörper), gesintert wird. Man erhält dann einen Sinterkörper, welcher die Trägervorrichtung bildet.

Die nachfolgende Beschreibung bevorzugter Ausführungsformen dient im Zusammenhang mit den Zeichnungen der näheren Erläuterung der Erfindung. Es zeigen:

Figur 1    eine Draufsicht auf ein Ausführungsbeispiel einer erfindungsgemäßen Trägervorrichtung;

Figur 2    eine schematische Schnittansicht längs der Linie 2-2 gemäß Figur 1;

Figur 3    eine schematische Schnittdarstellung eines ersten Ausführungsbeispiels eines erfindungsgemäßen Brennstoffzellenmoduls;

Figur 4    eine schematische Schnittdarstellung eines zweiten Ausführungsbeispiels eines erfindungsgemäßen Brennstoffzellenmoduls;

Figur 5    eine schematische Darstellung von Verfahrensschritten zur Herstellung einer erfindungsgemäßen Trägervorrichtung;

Figur 6    eine schematische Schnittdarstellung eines dritten Ausführungsbeispiels eines erfindungsgemäßen Brennstoffzellemoduls; und

Figur 7    eine schematische Schnittdarstellung eines vierten Ausführungsbeispiels eines erfindungsgemäßen Brennstoffzellenmoduls.

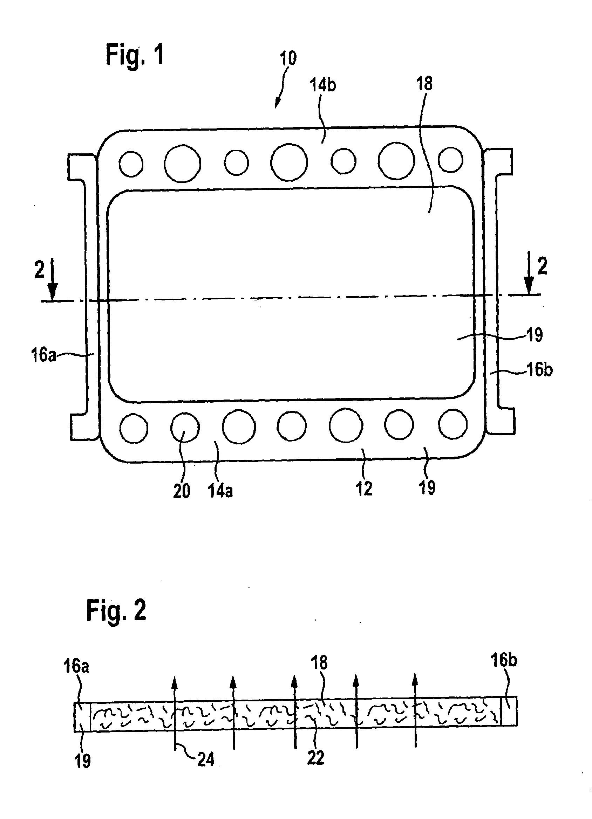

Ein Ausführungsbeispiel einer erfindungsgemäßen Trägervorrichtung, welches in Figur 1 gezeigt und dort mit 10 bezeichnet ist, ist plattenförmig ausgebildet. Die Trägervorrichtung 10 umfasst eine Rahmeneinrichtung 12 mit gegenüberliegenden, parallel beabstandeten Rahmenelementen 14a, 14b. Zu diesen Rahmenelementen 14a, 14b sind Rahmenelemente 16a, 16b quer und insbesondere senkrecht orientiert. Die Rahmenelemente 16a,16b sind beabstandet und insbesondere parallel beabstandet zueinander.

An der Rahmeneinrichtung 12 ist (mindestens) ein Fensterbereich 18 gehalten. Dieser Fensterbereich 18 ist einstückig mit den Rahmenelementen 14a, 14b, 16a und 16b verbunden. Er ist von der Rahmeneinrichtung 12 mit ihren Rahmenelementen 14a, 14b, 16a, 16b umgeben.

Die Rahmeneinrichtung 12 ist aus einem Vollmaterial 19 hergestellt, welches gasundurchlässig ist.

In der Rahmeneinrichtung 12 können dabei (im Vollmaterial) ein oder mehrere Kanäle 20 zur Fluiddurchführung angeordnet sein. Beispielsweise sind Kanäle 20 an den Rahmenelementen 14a und 14b gebildet. Die Kanäle 20 sind insbesondere als durchgehende Ausnehmungen ausgebildet.

Der Fensterbereich 18 ist aus einem offenporösen Material 22 hergestellt, so dassder Fensterbereich 18 gasdurchlässig ist (was in Figur 2 durch die Pfeile mit dem Bezugszeichen 24 angedeutet ist). Außerhalb des Fensterbereiches 18 ist die Trägervorrichtung 10 durch das Vollmaterial 19 der Rahmeneinrichtung 12 nichtgasdurchlässig. (Eine eventuelle Gasdurchlässigkeit kommt allein durch "makroskopische" Kanäle in der Form von Durchbohrungen oder Dergleichen zustande.)

Die Trägervorrichtung 10 mit der Rahmeneinrichtung 12 und dem Fensterbereich 18 ist aus einem (dem gleichen) elektrisch leitfähigen Material hergestellt. Insbesondere sind die Rahmeneinrichtung 12 und der Fensterbereich 18 aus einem ferritischen Stahl hergestellt, welcher beispielsweise einen Chromanteil von 17 % bis 28 % enthält und einen Mangananteil enthält. Auch der Fensterbereich 18 stellt einen elektrischen Kontaktpfad durch die poröse Ausbildung (und damit nicht-vollständige Öffnung) bereit.

Der Fensterbereich 18 ist integral an der Rahmeneinrichtung 12 gebildet, so dass keine zusätzliche Verbindungseinrichtung wie eine Lötverbindung, Schweißverbindung oder Klebeverbindung notwendig ist. Die Rahmeneinrichtung 12 und der Fensterbereich 18 werden insbesondere integral beispielsweise pulvermetallurgisch hergestellt.

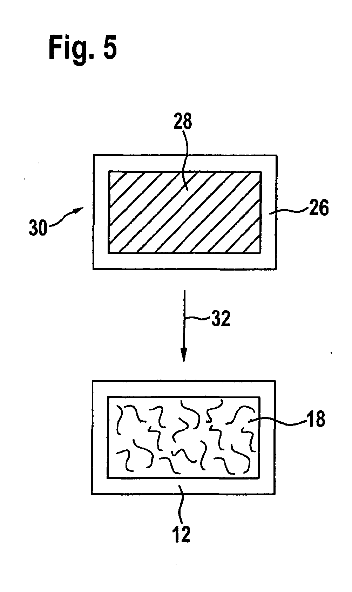

Bei einem Ausführungsbeispiel eines Herstellungsverfahrens, welches schematisch in Figur 5 gezeigt ist, werden unterschiedliche Ausgangsmaterialien 26,28 verwendet; das Ausgangsmaterial 26 wird für die Herstellung der Rahmeneinrichtung 12 verwendet und das Ausgangsmaterial 28 für die Herstellung des Fensterbereichs 18. Das Ausgangsmaterial 26 und das Ausgangsmaterial 28 umfasst jeweils Metallpulver und ein Bindemittel. Der Bindemittelanteil ist in dem Ausgangsmaterial 28 höher als in dem Ausgangsmaterial 26. Der Bindemittelanteil ist so gewählt, dass nach dem Sintern die Rahmeneinrichtung mit Vollmaterial gasundurchlässig ist und der Fensterbereich porös gasdurchlässig ist.

Aus dem Ausgangsmaterial 26 und dem Ausgangsmaterial 28 wird ein Vorkörper 30 hergestellt. Dazu wird das Ausgangsmaterial 26 und das Ausgangsmaterial 28 entsprechend der herzustellenden Form der Rahmeneinrichtung 12 und des (mindestens einen) Fensterbereichs 18 positioniert.

Bei einem Ausführungsbeispiel erfolgt eine Verpressung und eine anschließende Aushärtung zur Bildung eines Grünkörpers.

Es ist auch möglich, über ein PIM-Verfahren (PIM - Powder Injection Molding) durch Spritzguss das Ausgangsmaterial 26 und das Ausgangsmaterial 28 entsprechend zu positionieren.

Es ist beispielsweise auch möglich, bei einem Foliengießverfahren über entsprechende Positionierung von Pasten an dem Ausgangsmaterial 26 und dem Ausgangsmaterial 28 den Vorkörper 30 herzustellen.

Der Vorkörper 30 (Grünkörper) wird gesintert. Dies ist in Figur 5 schematisch durch den Pfeil mit dem Bezugszeichen 32 dargestellt. Durch Wärmebehandlung erfolgt an dem Ausgangsmaterial 28 eine Porenbildung und der Fensterbereich 18 wird hergestellt. Dieser ist von der Rahmeneinrichtung 12 umgeben, wobei der Fensterbereich 18 integral an der Rahmeneinrichtung 12 gebildet ist.

Man erhält dann die Trägervorrichtung 10. Diese ist als Sinterplatte ausgebildet. Da sie aus elektrisch leitfähigem Material hergestellt ist, lässt sich diese auch als Bipolarplatte einsetzen, um beispielsweise an einer Seite direkt oder indirekt eine Kathode zu kontaktieren und auf einer anderen Seite direkt oder indirekt eine Anode zu kontaktieren.

Die spezielle Ausbildung der Rahmeneinrichtung 12 und des oder der Fensterbereiche 18 ist angepasst an die spezielle Anwendung. Es können beispielsweise mehrere Fensterbereiche vorgesehen sein, welche von den entsprechenden Rahmenelementen der Rahmeneinrichtung umgeben sind.

Integral mit der Herstellung lassen sich auf der Trägervorrichtung 10 auch eine oder mehrere weitere Schichten herstellen. Beispielsweise lassen sich direkt integral während der Herstellung der Trägervorrichtung 10 auf dem Fensterbereich 18 und/oder der Rahmeneinrichtung 12 eine oder mehrere keramische Schichten anordnen. Dazu werden für die Herstellung des Vorkörpers 30 eine oder mehrere weitere Schichten an einem weiteren Ausgangsmaterial auf entsprechenden Bereichen positioniert.

Die Trägervorrichtung 10 lässt sich beispielsweise als Bipolarplatte oder Interkonnektor für eine Hochtemperatur-Brennstoffzelle und insbesondere oxidkeramische Brennstoffzelle (SOFC-Brennstoffzelle) einsetzen.

Die Trägervorrichtung 10 kann als Substrat für eine elektrochemische Funktionseinrichtung dienen. Beispielsweise ist auf der Trägervorrichtung 10 direkt ein elektrisch leitfähiges Trägersubstrat für eine Anode angeordnet oder die Anode ist direkt an dem Fensterbereich 18 der Trägervorrichtung 10 angeordnet.

Es ist grundsätzlich auch möglich, dass die Trägervorrichtung ein Trägersubstrat für eine Kathode ist.

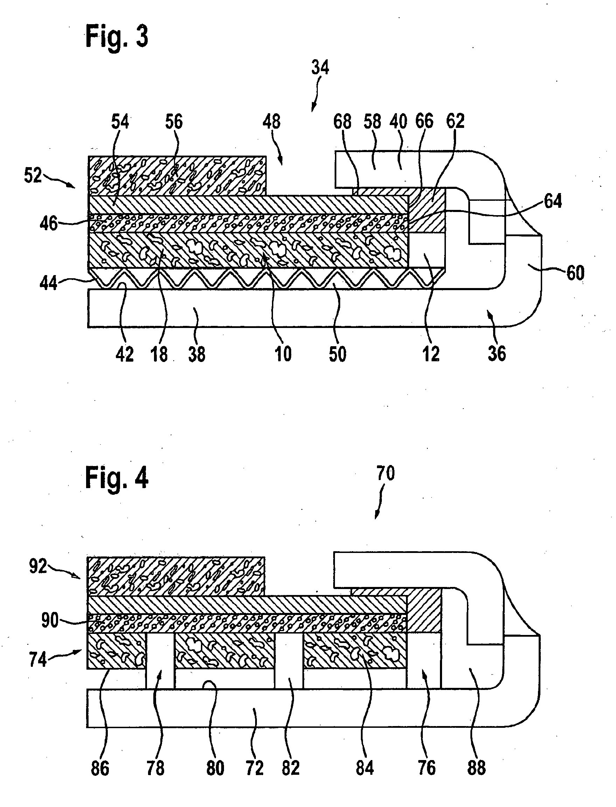

Ein erstes Ausführungsbeispiel eines Brennstoffzellenmoduls, welches in Figur 3 gezeigt und dort mit 34 bezeichnet ist, weist eine Trägervorrichtung 10 mit der Rahmeneinrichtung 12 und dem Fensterbereich 18 auf.

Das Brennstoffzellenmodul 34 umfasst ein Gehäuse 36 aus einem metallischen Material mit einem ersten Gehäuseteil 38 und einem zweiten Gehäuseteil 40. Der erste Gehäuseteil 38 weist eine im Wesentlichen ebene Innenseite 42 auf. An dieser Innenseite 42 ist eine elektrische Kontakteinrichtung 44 angeordnet. Die Trägervorrichtung 10 stützt sich auf der elektrischen Kontakteinrichtung 44 ab und ist mit dieser beispielsweise durch Verlötung verbunden. Die elektrische Kontakteinrichtung 44 ist selber mit dem ersten Gehäuseteil 38 beispielsweise durch Verlötung verbunden.

Die elektrische Kontakteinrichtung 44 ist so ausgebildet, dass sie einen elektrischen Kontakt zwischen dem Gehäuse 36 und einer Anode 46 einer elektrochemischen Funktionseinrichtung 48 herstellt, welche auf der Trägervorrichtung 10 angeordnet ist. Sie ist gasdurchlässig ausgebildet, so dass Reaktionsgase durch die elektrische Kontakteinrichtung 44 hindurch und durch den Fensterbereich 18 der Trägervorrichtung 10 zu der Anode 46 gelangen können, so dass dort elektrochemische Zellreaktionen durchführbar sind. Die elektrochemische Kontakteinrichtung 44 ist beispielsweise als Netz oder Gewebe oder Gewirke ausgebildet.

Zwischen der Trägervorrichtung 10 und der Innenseite 42 des Gehäuses 36 ist ein Anodenraum 50 gebildet, in welchen beispielsweise über Kanäle 20 Reaktionsgase (Brennstoffgase) einkoppelbar sind und über den die Anode 46 mit Reaktionsgasen versorgbar ist.

Die elektrochemische Funktionseinrichtung 48 ist über eine Anoden-Elektrolyt-Kathoden-Einheit 52 gebildet. Sie umfasst die Anode 46, welche beispielsweise aus einem oxidkeramischen Material wie Yttrium-stabilisiertem Zirkonoxid und Nickel als Katalysator hergestellt ist.

Auf der Anode 46 ist eine Elektrolytschicht mit einem gasundurchlässigen Elektrolyten 54 angeordnet. Dieser Elektrolyt 54 ist für Elektronen nicht leitfähig. Er ist jedoch sauerstoffionenleitend. Er ist insbesondere aus einem keramischen Material hergestellt wie beispielsweise aus Yttrium-stabilisiertem Zirkonoxid.

Auf dem Elektrolyten 54 ist eine Kathode 56 angeordnet. Diese ist aus einem oxidkeramischen Material hergestellt. Beispielsweise werden zur Herstellung Mischoxide wie Lanthan-Strontium-Manganat eingesetzt.

Bei einer Hochtemperatur-Brennstoffzelle finden an der Kathode 56 folgende Zellreaktionen statt:

$$\frac{1}{2}O_2 + 2e^- \rightarrow O^{2-}$$

Der Anode 46 wird Brennstoff zugeführt. Es finden folgende Zellreaktionen statt:

$$H_2 + O^2 \rightarrow H_2O + 2e^-$$

Die entsprechende Brennstoffzelle wird bei einer Temperatur im Bereich von ca. 650°C bis 1000°C betrieben.

Der Brennstoff (welcher Wasserstoffgas ist oder enthält), kann beispielsweise über einen Reformer geliefert werden.

Der zweite Gehäuseteil 40 ist teilweise überlappend zu der Trägervorrichtung 10 angeordnet. Er weist einen Überlappbereich 58 auf, welcher seitlich beabstandet zu der Kathode 56 ist und oberhalb der Innenseite 42 liegt. Dieser Überlappbereich 58 ragt von einer Seitenwand 60 weg. Der Überlappbereich 58 ist vorzugsweise mindestens näherungsweise parallel zu der Innenseite 42 und quer und beispielsweise senkrecht zu der Seitenwand 60 angeordnet. Der zweite Gehäuseteil 40 und der erste Gehäuseteil 38 liegen dabei auf demselben elektrischen Potential. Sie sind entsprechend miteinander verbunden; beispielsweise sind sie einstückig miteinander verbunden.

Bei einem Ausführungsbeispiel ist die Trägervorrichtung 10 über eine Lotschicht 62 elektrisch leitend mit dem Überlappbereich 58 des zweiten Gehäuseteils 40 verbunden. Die Lotschicht 62 ist dabei auf der Rahmeneinrichtung 12 angeordnet. Sie liegt ferner an Stirnseiten 64, 66 der Anode 46 und des Elektrolyten 54. Weiterhin liegt sie an einer Oberseite 68 des Elektrolyten 54. Diese Lotschicht 62 ist dabei umlaufend ausgebildet. Sie stellt neben der elektrischen Kontaktierung zwischen dem Gehäuse 36 und der Anode 46 (über deren Stirnseite 64) und der elektrischen Kontaktierung der Trägervorrichtung 10 zusätzlich zu der elektrischen Kontakteinrichtung 44 eine Fluddichtung bereit, welche den Anodenraum 50 gegenüber der Kathode 56 abdichtet. Weiterhin sorgt sie für eine mechanische Fixierung der Trägervorrichtung 10 und der elektrochemischen Funktionseinrichtung im Gehäuse 36.

Über die Lotschicht 62 erfolgt eine elektrische Kontaktierung der Anode 46 (direkt über die Stirnseite 64 und indirekt über die Lotschicht 62 an der Rahmeneinrichtung 12 über die Trägervorrichtung 10) zusätzlich zu der elektrischen Kontakteinrichtung 44.

Durch diese zusätzliche Kontaktierung wird insgesamt ein weiterer elektronischer Leitungspfad zusätzlich zu dem elektronischen Leitungspfad über die elektrische Kontakteinrichtung 44 bereitgestellt.

Durch die Positionierung der Lotschicht 62 auf der Rahmeneinrichtung 12 wird der Fensterbereich 18 nicht verringert.

Mehrere Brennstoffzellenmodule 34 lassen sich zu einem Brennstoffzellenstapel aneinanderfügen. Beispielsweise kontaktiert dazu die Kathode 56 das Gehäuse 36 einer benachbarten Brennstoffzelle.

Es ist grundsätzlich möglich, dass das Brennstoffzellenmodul einen umgekehrten Aufbau bezüglich der Anordnung von Anode, Elektrolyt und Kathode hat. Die Kathode kann auf einem Kathodenträger als erste Schicht angeordnet sein. Auf der Kathode ist die Elektrolytschicht angeordnet und die Anode ist als letzte Schicht auf dem Elektrolyt angeordnet.

Bei einem zweiten Ausführungsbeispiel eines

Brennstoffzellemoduls, welches schematisch in Figur 4 gezeigt und dort mit 70 bezeichnet ist, ist in einem Gehäuse 72, welches beispielsweise gleich ausgebildet ist wie das Gehäuse 36, eine Trägervorrichtung 74 angeordnet. Diese weist eine Rahmeneinrichtung 76 auf, an welcher integral eine elektrische Kontakteinrichtung 78 gebildet ist. Über diese elektrische Kontakteinrichtung 78 stützt sich die Trägervorrichtung 74 an einer Innenseite 80 des Gehäuses 72 mechanisch ab, wobei gleichzeitig beispielsweise durch eine Lötverbindung ein elektrischer Kontakt hergestellt ist.

Die elektrische Kontakteinrichtung 78 ist beispielsweise durch Stützfüße 82 gebildet, welche an der Rahmeneinrichtung 76 angeordnet und insbesondere einstückig gebildet sind.

Die Rahmeneinrichtung 76 hält einen oder mehrere Fensterbereiche 84, welche eine Unterseite 86 aufweisen, die zu der Innenseite 80 des Gehäuses 72 beabstandet ist. DieserAbstand wird durch die Stützfüße 82 erreicht. Durch die Beabstandung der Unterseite 86 der Fensterbereiche 84 und der Innenseite 80 ist in dem Gehäuse 72 ein Anodenraum 88 gebildet. Über den Anodenraum können Brennstoffgase zu den Fensterbereichen 84 zugeführt werden und durch das poröse Material dieser Fensterbereiche 84 zu einer Anode 90 einer Anoden-Elektrolyt-Kathoden-Einheit 92 gelangen.

Bei dem beschriebenen Ausführungsbeispiel ist die elektrische Kontakteinrichtung 78 in die Trägervorrichtung 74 integriert.

Ansonsten funktioniert das Brennstoffzellenmodul 70 wie oben anhand des Brennstoffzellenmoduls 34 beschrieben.

Durch die erfindungsgemäße Lösung wird eine Trägervorrichtung für eine elektrochemische Funktionseinrichtung bereitgestellt, welche elektrisch leitfähig ist (für Elektronenleitung). Die Trägervorrichtung lässt sich dadurch als Bipolarplatte oder Interkonnektor ausbilden. Sie kann elektrochemische Funktionsschichten tragen. Beispielsweise ist auf der Trägervorrichtung 10 direkt ein Anodensubstrat angeordnet oder eine Anödenschicht.

Der oder die Fensterbereiche 18 sind dann direkt in die Rahmeneinrichtung 12 integriert. Es ist dazu kein nachträgliches Löten oder Schweißen notwendig. Ein Löten oder Schweißen kann zu Spannungen führen, welche zu einem Verzug führen können. Unebene Teile sind nicht geeignet für den Aufbau eines Brennstoffzellenstapels. Durch die erfindungsgemäße Lösung einer integralen Trägervorrichtung 10 sind Probleme mit Übergängen an Lötstellen bzw. Schweißverbindungen vermieden; es entstehen keine Sprünge im Ausdehnungskoeffizienten, der Spannungsverteilung, Legierungsanteile usw. Dadurch entstehen auch keine Probleme mit keramischen Schichten, welche auf der Trägervorrichtung 10 angeordnet sind, da diese keramischen Schichten nicht an Lötstellen bzw. Schweißstellen angeordnet sind.

Die Trägervorrichtung 10 weist keine Sprünge im thermischen Ausdehnungskoeffizienten, in der Spannungsverteilung, in den Legierungsanteilen usw. auf. Sie lässt sich auf einfache Weise mit einer Minimierung der Anzahl der Herstellungsschritte herstellen. Der für die Herstellung eines Fensterbereichs 18 notwendige Herstellungsschritt wird gleichzeitig für die Herstellung der Rahmeneinrichtung 12 genutzt.

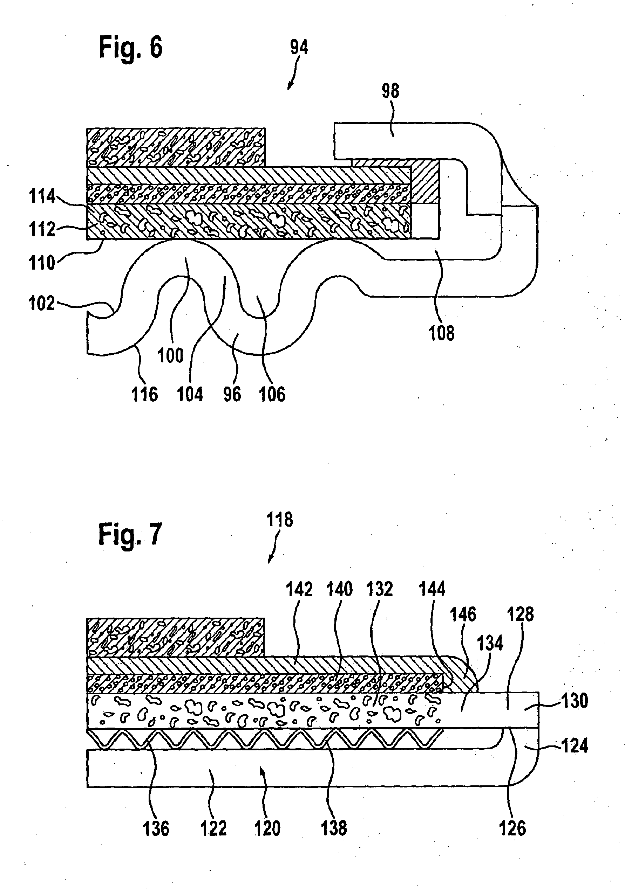

Ein drittes Ausführungsbeispiel eines erfindungsgemäßen Brennstoffzellenmoduls, welches in Figur 6 gezeigt und dort mit 94 bezeichnet ist, umfasst ein Gehäuse 95 mit einem ersten Gehäuseteil 96 und einem zweiten Gehäuseteil 98. Der zweite Gehäuseteil 98 ist grundsätzlich gleich ausgebildet wie der zweite Gehäuseteil 40 bei dem Brennstoffzellenmodul 34.

Der erste Gehäuseteil 96 weist einen Bodenbereich 100 auf, welcher "wellig" ausgebildet ist. Eine Innenseite 102 dieses Bodenbereichs 100 umfasst beabstandete Erhebungen 104, zwischen welchen Kanäle 106 gebildet sind. Die Kanäle 106 sind dabei derart miteinander verbunden, dass ein Anodenraum 108 gebildet ist. Der Anodenraum 108 ist durch den zweiten Gehäuseteil 98 nach oben geschlossen.

Die Erhebungen 104 weisen eine Einhüllende 110 auf, welche im Wesentlichen eine Ebene ist.

An den Erhebungen 104 ist ein Anodenträger 112 angeordnet. Er ist mit den Erhebungen 104 beispielsweise durch Schweißen oder Löten verbunden.

Auf dem Anodenträger sitzt eine elektrochemische Funktionseinrichtung mit einer Anode, einer Elektrolytschicht und einer Kathode. Der Aufbau des Anodenträgers, welcher durch eine erfindungsgemäße Trägervorrichtung gebildet ist, und der elektrochemischen Funktionseinrichtung sowie die Verbindung mit dem zweiten Gehäuseteil 98 ist dabei grundsätzlich gleich wie bei dem Ausführungsbeispiel 34 beschrieben.

Bei dem Brennstoffzellenmodul 94 ist die Trägervorrichtung 114 (welche dem Anodenträger 112 entspricht) direkt an dem ersten Gehäuseteil 96 abgestützt. Eine elektrische Kontakteinrichtung entsprechend der elektrischen Kontakteinrichtung 44 ist nicht vorgesehen.

Der erste Gehäuseteil 96 ist als Gasverteiler ausgebildet. Der Gasverteiler, welcher durch die Erhebungen 104 an der Innenseite 102 des ersten Gehäuseteils 96 gebildet ist, ist ein Gasverteiler für Brennstoffgas.

Auf einer der Innenseite 102 gegenüberliegenden Außenseite 116 ist ebenfalls ein Gasverteiler gebildet. Mit der Außenseite 116 lässt sich eine Kathode eines benachbarten Brennstoffzellenmoduls verbinden, wobei durch die entsprechenden Kanäle an der Außenseite 116 die Kathode mit Oxidatorgas versorgbar ist.

Ansonsten entspricht die Funktionsweise des Brennstoffzellenmoduls 94 der Funktionsweise des Brennstoffzellenmoduls 34.

Bei einem vierten Ausführungsbeispiel eines erfindungsgemäßen Brennstoffzellenmoduls, welches in Figur 7 gezeigt und dort mit 118 bezeichnet ist, ist ein Gehäuse 120 mit einem ersten Gehäuseteil 122 vorgesehen. Der erste Gehäuseteil 122 ist als Unterschale ausgebildet. Der erste Gehäuseteil 122 umfasst einen umlaufenden hochgezogenen Randbereich 124 mit einer im Wesentlichen ebenen Stirnfläche 126. Auf die Stirnfläche aufgelegt sitzt eine Trägervorrichtung 128, welche mit dem Randbereich 124 des ersten Gehäuseteils 122 beispielsweise durch Löten oder Schweißen verbunden ist. Die Trägervorrichtung 128 ist dabei mit einem gasundurchlässigen Rahmenbereich 130 auf den Randbereich 124 aufgesetzt.

An dem Rahmenbereich 130 ist integral ein poröser gasdurchlässiger Fensterbereich 132 gebildet.

Die Trägervorrichtung 128 bildet insbesondere mit ihrem Rahmenbereich 130 einen zweiten Gehäuseteil 134. Durch die Trägervorrichtung 128 als zweiten Gehäuseteil 134 und den ersten Gehäuseteil 122 mit seinem hochgezogenen Randbereich 124 ist ein Anödenraum 136 begrenzt. In diesem ist eine elektrische Kontakteinrichtung 138 angeordnet, welche grundsätzlich wie die oben beschriebene elektrische Kontakteinrichtung 44 funktioniert. Die elektrische Kontakteinrichtung 138 ist insbesondere mit dem ersten Gehäuseteil 122 verbunden und mit der Trägervorrichtung 128 verbunden.

Es ist grundsätzlich möglich, dass der erste Gehäuseteil 122 direkt mit der Trägervorrichtung 128 verbunden ist.

Auf der Trägervorrichtung 128 ist eine Anode 140 angeordnet. Diese sitzt insbesondere an dem Fensterbereich 132, ohne über diesen hinauszuragen.

Die Anode 140 ist durch eine Elektrolytschicht 142 überdeckt. Die Elektrolytschicht 142 läuft dabei über eine Seitenfläche 144 der Anode 140 in den Rahmenbereich 130, das heißt die Elektrolytschicht 142 weist einen Bereich 146 auf, welcher auf dem Rähmenbereich 130 der Trägervorrichtung 128 liegt.

Die Elektrolytschicht 142 ist gasdicht. Sie deckt die Anode 140oben nach außen ab und über den Bereich 146 seitlich nach außen ab. Da der Bereich 146 auf den Rahmenbereich 130 aufgesetzt ist, kann seitlich kein Brennstoffgas aus dem Fensterbereich 132 direkt auf die Kathodenseite gelangen oderdurch die Anode 140 durch auf die Kathodenseite gelangen.

Es ist grundsätzlich auch möglich, dass die Elektrolytschicht 142 den Rahmenbereich 130 nach oben vollständig abdeckt. Dadurch lässt sich die Isolationswirkung bezüglich elektronischer Leitung des Brennstoffzellenmoduls 118 zu einem benachbarten Brennstoffzellenmodul erhöhen.

Der Flächenbereich, welcher durch die Elektrolytschicht 142 abgedeckt wird, ist größer als der Flächenbereich des Fensterbereichs 132 und ist auch größer als der Flächenbereich der Anode 140.

Ansonsten funktioniert das Brennstoffzellenmodul 118 wie oben beschrieben.

## Patentansprüche

1. Trägervorrichtung für eine elektrochemische Funktionseinrichtung einer Hochtemperatur-Brennstoffzelle (52), umfassend eine Rahmeneinrichtung (12) aus einem elektrisch leitfähigen Material und mindestens einen Fensterbereich (18) aus einem elektrisch leitfähigen Material, welcher an der Rahmeneinrichtung (12) integral gebildet ist und einstückig an der Rahmeneinrichtung (12) angeordnet ist, wobei der mindestens eine Fensterbereich (18) aus einem porösen Material hergestellt ist und über die Porosität gasdurchlässig ist und wobei die Rahmeneinrichtung (12) im Vollmaterial gasundurchlässig ist, wobei die Trägervorrichtung pulvermetallurgisch hergestellt ist und unterschiedliche Ausgangsmaterialien (26, 28) für die Herstellung der Rahmeneinrichtung (12) und des Fensterbereichs (18) verwendet sind, wobei die Ausgangsmaterialien (26, 28) Metallpulver und Bindemittel umfassen und der Bindemittelanteil in dem Ausgangsmaterial (28) für den Fensterbereich (18) höher ist als in dem Ausgangsmaterial (26) für die Rahmeneinrichtung (12).

2. Trägervorrichtung nach Anspruch 1, **gekennzeichnet durch** einen oder mehrere Stützfüße (82), wobei insbesondere ein oder mehrere Stützfüße (82) an der Rahmeneinrichtung (12) angeordnet sind, und wobei vorzugsweise die Stützfüße (82) so angeordnet und ausgebildet sind, dass unterhalb des mindestens einen Fensterbereichs (18) ein Gasraum ausbildbar ist.

3. Trägervorrichtung nach einem der vorangehenden Ansprüche, **gekennzeichnet durch** eine Ausbildung als Bipolarplatte und/oder als Interkonnektor.

4. Trägervorrichtung nach einem der vorangehenden Ansprüche, **dadurch gekennzeichnet, dass** an der Rahmeneinrichtung (12) eine elektrische Kontakteinrichtung (78) angeordnet ist, über die die Rahmeneinrichtung (12) an einem Gehäuse (72) abstützbar ist.

5. Trägervorrichtung nach einem der vorangehenden Ansprüche, **dadurch gekennzeichnet, dass** an dem mindestens einen Fensterbereich (18) mindestens eine elektrochemische Funktionsschicht angeordnet ist, wobei insbesondere die mindestens eine elektrochemische Funktionsschicht integral mit dem Fensterbereich (18) hergestellt ist, und wobei vorzugsweise die mindestens eine elektrochemische Funktionsschicht eine Anodenschicht oder Kathodenschicht ist, und insbesondere die mindestens eine elektrochemische Funktionsschicht eine poröse Anodensubstratschicht oder poröse Kathodensubstratschicht ist.

6. Trägervorrichtung nach einem der vorangehenden Ansprüche, **dadurch gekennzeichnet, dass** an der Rahmeneinrichtung (12) ein oder mehrere Kanäle (20) angeordnet sind, wobei insbesondere ein Kanal (20) als durchgehende Öffnung ausgebildet ist.

7. Trägervorrichtung nach einem der vorangehenden Ansprüche, **gekennzeichnet durch** eine Ausbildung als Platte und insbesondere als Sinterplatte.

8. Trägervorrichtung nach einem der vorangehenden Ansprüche, **gekennzeichnet durch** eine Herstellung der Rahmeneinrichtung (12) und des mindestens einen Fensterbereichs (18) aus Stahl.

9. Hochtemperatur-Brennstoffzellenmodul, umfassend eine elektrochemische Funktionseinrichtung (52; 92) und eine Trägervorrichtung (10; 74; 114; 128) gemäß einem der vorangehenden Ansprüche, wobei die elektrochemische Funktionseinrichtung (52; 92) an der Trägervorrichtung (10; 74; 114; 128) angeordnet ist.

10. Hochtemperatur-Brennstoffzellenmodul nach Anspruch 9, **gekennzeichnet durch** ein Gehäuse (36; 72; 95; 120), wobei insbesondere die Trägervorrichtung (10; 74; 114) an dem Gehäuse (36; 72; 95) angeordnet ist oder die Trägervorrichtung (114) Teil des Gehäuses (120) ist.

11. Hochtemperatur-Brennstoffzellenmodul nach Anspruch 10, **dadurch gekennzeichnet, dass** die Trägervorrichtung (128) ein Deckelelement des Gehäuses (120) bildet, welches einen Elektrodenraum (136) abschließt.

12. Hochtemperatur-Brennstoffzellenmodul nach Anspruch 10 oder 11, **dadurch gekennzeichnet, dass** eine gasdichte Elektrolytschicht (142) den mindestens einen Fensterbereich (132) vollständig überdeckt.

13. Hochtemperatur-Brennstoffzellenmodul nach einem der Ansprüche 10 bis 12, **dadurch gekennzeichnet, dass** die Rahmeneinrichtung (12; 76; 130) mit dem Gehäuse (36; 72) oder einem Gehäuseteil (122) verlötet ist.

14. Hochtemperatur-Brennstoffzellenmodul nach Anspruch 13, **dadurch gekennzeichnet, dass** die Rahmeneinrichtung (76) an gegenüberliegenden Seiten mit dem Gehäuse (72) verlötet ist.

15. Verfahren zur Herstellung einer Trägervorrichtung für eine elektrochemische Funktionseinrichtung einer Hochtemperatur-Brennstoffzelle, bei dem aus elektrisch leitfähigem Material eine im Vollmaterial gasundurchlässige Rahmeneinrichtung hergestellt wird und an der Rahmeneinrichtung mindestens ein poröser, gasdurchlässiger Fensterbereich einstückig hergestellt wird, wobei die Rahmeneinrichtung und der mindestens eine Fensterbereich pulvermetallurgisch aus dem gleichen Material hergestellt werden.

**Claims**

1. Carrier device for an electrochemical functional unit of a high-temperature fuel cell (52), comprising a frame unit (12) consisting of an electrically conductive material and at least one window area (18) consisting of an electrically conductive material, which is integrally formed on the frame unit (12) and is arranged in one piece on the frame unit (12), wherein the at least one window area (18) is produced from a porous material and is permeable to gas via its porosity and wherein the frame unit (12) is impermeable to gas in its solid material, the carrier device being produced powder metallurgically, and different starting materials (26, 28) being used for the production of the frame unit (12) and the window area (18), the starting materials (26, 28) comprising metallic powder and binding agent, and the proportion of binding agent in the starting material (28) for the window area (18) being higher than in the starting material (26) for the frame unit (12).

2. Carrier device in accordance with claim 1, **characterized by** one or more supporting feet (82), in particular, one or more supporting feet (82) being arranged on the frame unit (12), and the supporting feet (82) preferably being arranged and constructed such that a gas compartment can be formed beneath the at least one window area (18).

3. Carrier device in accordance with any one of the preceding claims, **characterized by** a construction as a bipolar plate and/or as an interconnector.

4. Carrier device in accordance with any one of the preceding claims, **characterized in that** there is arranged on the frame unit (12) an electrical contact device (78) via which the frame unit (12) is supportable on a housing (72).

5. Carrier device in accordance with any one of the preceding claims, **characterized in that** at least one electrochemical functional layer is arranged at the at least one window area (18), in particular, the at least one electrochemical functional layer is produced integrally with the window area (18), and the at least one electrochemical functional layer is preferably an anode layer or a cathode layer, and, in particular, the at least one electrochemical functional layer is a porous anode substrate layer or a porous cathode substrate layer.

6. Carrier device in accordance with any one of the preceding claims, **characterized in that** one or more channels (20) are arranged on the frame unit (12), and, in particular, one channel (20) is constructed as a continuous opening.

7. Carrier device in accordance with any one of the preceding claims, **characterized by** a construction as a plate and, in particular, as a sintered plate.

8. Carrier device in accordance with any one of the preceding claims, **characterized by** a production of the frame unit (12) and the at least one window area (18) from steel.

9. High-temperature fuel cell module, comprising an electrochemical functional unit (52; 92) and a carrier device (10; 74; 114; 128) in accordance with any one of the preceding claims, the electrochemical functional unit (52; 92) being arranged on the carrier device (10; 74; 114; 128).

10. High-temperature fuel cell module in accordance with claim 9, **characterized by** a housing (36; 72; 95; 120), in particular, the carrier device (10; 74; 114) being arranged on the housing (36; 72; 95) or the carrier device (114) being part of the housing (120).

11. High-temperature fuel cell module in accordance with claim 10, **characterized in that** the carrier device (128) forms a cover element of the housing (120) closing an electrode compartment (136).

12. High-temperature fuel cell module in accordance with claim 10 or 11, **characterized in that** a gas-tight electrolyte layer (142) covers the at least one window area (132) completely.

13. High-temperature fuel cell module in accordance with any one of claims 10 to 12, **characterized in that** the frame unit (12; 76; 130) is soldered to the housing (36; 72) or a section (122) of the housing.

14. High-temperature fuel cell module in accordance with claim 13, **characterized in that** the frame unit (76) is soldered to the housing (72) on oppositely located sides.

15. Method for the production of a carrier device for an electrochemical functional unit of a high-temperature fuel cell, wherein a frame unit impermeable to gas in its solid material is produced from electrically conductive material and at least one porous window area permeable to gas is produced in one piece on the frame unit, and wherein the frame unit and the at least one window area are produced powder metallurgically from the same material.

**Revendications**

1. Dispositif support pour un équipement fonctionnel électrochimique d'une pile à combustible haute température (52), comprenant un système de châssis (12) constitué d'un matériau électriquement conducteur et d'au moins une zone de fenêtre (18) constituée d'un matériau électriquement conducteur, qui fait partie intégrante du système de châssis (12) et est disposé de manière monobloc sur le système de châssis (12), l'au moins une zone de fenêtre (18) étant fabriquée en un matériau poreux et étant perméable au gaz grâce à la porosité, et le système de châssis (12) en matériau plein étant imperméable au gaz, le dispositif support étant fabriqué par métallurgie des poudres et différents matériaux de départ (26, 28) étant utilisés pour la fabrication du système de châssis (12) et de la zone de fenêtre (18), les matériaux de départ (26, 28) comprenant des poudres de métaux et des liants et la proportion de liants dans le matériau de départ (28) pour la zone de fenêtre (18) étant supérieure à celle dans le matériau de départ (26) pour le système de châssis (12).

2. Dispositif support selon la revendication 1, **caractérisé par** un ou plusieurs pieds d'appui (82), en particulier un ou plusieurs pieds d'appui (82) étant disposés sur le système de châssis (12), et les pieds d'appui (82) étant disposés et conçus de préférence de sorte qu'un espace gazeux puisse se former en dessous de l'au moins une zone de fenêtre (18).

**EP 2 149 171 B3**

3. Dispositif support selon l'une des revendications précédentes, **caractérisé par** une configuration sous forme de plaque bipolaire et/ou d'interconnecteur.

4. Dispositif support selon l'une des revendications précédentes, **caractérisé en ce qu'**un système de contacts électrique (78), grâce auquel le système de châssis (12) peut s'appuyer sur un boîtier (72), est disposé sur le système de châssis (12).

5. Dispositif support selon l'une des revendications précédentes, **caractérisé en ce qu'**au moins une couche fonctionnelle électrochimique est disposée sur l'au moins une zone de fenêtre (18), en particulier l'au moins une couche fonctionnelle électrochimique étant fabriquée de manière à faire partie intégrante de la zone de fenêtre (18), et de préférence l'au moins une couche fonctionnelle électrochimique étant une couche d'anode ou une couche de cathode, et l'au moins une couche fonctionnelle électrochimique en particulier étant une couche substrat d'anode poreuse ou une couche substrat de cathode poreuse.

6. Dispositif support selon l'une des revendications précédentes, **caractérisé en ce qu'**un ou plusieurs canaux (20) sont disposés sur le système de châssis (12), un canal (20) en particulier étant conçu sous la forme d'ouverture continue.

7. Dispositif support selon l'une des revendications précédentes, **caractérisé par** une configuration sous forme de plaque et en particulier sous forme de plaque frittée.

8. Dispositif support selon l'une des revendications précédentes, **caractérisé par** une fabrication du système de châssis (12) et de l'au moins une zone de fenêtre (18) en acier.

9. Module de pile à combustible haute température, comprenant un équipement fonctionnel électrochimique (52 ; 92) et un dispositif support (10 ; 74 ; 114 ; 128) selon l'une des revendications précédentes, l'équipement fonctionnel électrochimique (52 ; 92) étant disposé sur le dispositif support (10 ; 74 ; 114 ; 128).

10. Module de pile à combustible haute température selon la revendication 9, **caractérisé par** un boîtier (36 ; 72 ; 95 ; 120), le dispositif support (10 ; 74 ; 114) en particulier étant disposé sur le boîtier (36 ; 72 ; 95) ou le dispositif support (114) faisant partie du boîtier (120).

11. Module de pile à combustible haute température selon la revendication 10, **caractérisé en ce que** le dispositif support (128) forme un élément de couvercle du boîtier (120), lequel ferme une chambre à électrodes (136).

12. Module de pile à combustible haute température selon la revendication 10 ou 11, **caractérisé en ce qu'**une couche d'électrolyte étanche au gaz (142) recouvre entièrement l'au moins une zone de fenêtre (132).

13. Module de pile à combustible haute température selon l'une des revendications 10 à 12, **caractérisé en ce que** le système de châssis (12 ; 76 ; 130) est brasé avec le boîtier (36 ; 72) ou une partie du boîtier (122).

14. Module de pile à combustible haute température selon la revendication 13, **caractérisé en ce que** le système de châssis (76) est brasé avec le boîtier (72) sur ses faces opposées.

15. Procédé de fabrication d'un dispositif support pour un équipement fonctionnel électrochimique d'une pile à combustible haute température, dans lequel on fabrique un système de châssis imperméable au gaz en matériau plein à partir d'un matériau électriquement conducteur, et on fabrique de manière monobloc au moins une zone de fenêtre poreuse perméable au gaz sur le système de châssis, le système de châssis et l'au moins une zone de fenêtre étant fabriqués par métallurgie des poudres à partir du même matériau.

**Fig. 1**

**Fig. 2**

# Fig. 3

54  56          48          34          68  58  40  66  62

52

46

44

42  18  38          10  50          12  36

64

60

# Fig. 4

92          70

90

74

86  78  80  72  82          84  76  88

# Fig. 5

**Fig. 6**

94

98

114
112
110
102

116  104  96  106

100

108

**Fig. 7**

118

142  140  132  144
146  128
134

130
124

136  122  120  138

126

# EP 2 149 171 B3

## IN DER BESCHREIBUNG AUFGEFÜHRTE DOKUMENTE

### In der Beschreibung aufgeführte Patentdokumente

- DE 19841919 A1
- DE 202005020601 U1
- EP 1318560 A2
- WO 9953558 A
- GB 2368450 A
- GB 2400723 A